(19) **Europäisches Patentamt / European Patent Office / Office européen des brevets**

(11) **EP 4 553 394 A1**

(12) **EUROPEAN PATENT APPLICATION**
published in accordance with Art. 153(4) EPC

(43) Date of publication:
**14.05.2025 Bulletin 2025/20**

(21) Application number: **22960593.6**

(22) Date of filing: **25.11.2022**

(51) International Patent Classification (IPC):
**F24F 5/00** (2006.01)      **F24F 11/00** (2018.01)
**F24F 110/10** (2018.01)

(52) Cooperative Patent Classification (CPC):
**F24F 5/00; F24F 13/22;** F24F 2110/00;
F24F 2110/10; F24F 2110/30; F24F 2110/64;
Y02B 30/70

(86) International application number:
**PCT/CN2022/134423**

(87) International publication number:
**WO 2024/065996 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211217919**

(71) Applicant: **GD Midea Air-Conditioning Equipment Co., Ltd.**
**Foshan, Guangdong 528311 (CN)**

(72) Inventors:
• **ZHONG, Mingliang**
**Foshan, Guangdong 528311 (CN)**

• **XU, Zhenkun**
**Foshan, Guangdong 528311 (CN)**
• **LI, Jinbo**
**Foshan, Guangdong 528311 (CN)**
• **HUANG, Zhaobin**
**Foshan, Guangdong 528311 (CN)**
• **HUANG, Jianyun**
**Foshan, Guangdong 528311 (CN)**
• **ZHU, Jiansheng**
**Foshan, Guangdong 528311 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **ANTI-CONDENSATION CONTROL METHOD, DEVICE, APPARATUS AND STORAGE MEDIUM**

(57)    The present application belongs to the technical field of air conditioners. Disclosed are an anti-condensation control method, a device, an apparatus and a storage medium. The method comprises: in a cooling mode, acquiring a water supply temperature of a water chilling unit and a dew-point temperature of a space where a tail end heat exchange component is located; on the basis of the water supply temperature and the dew-point temperature, calculating a current temperature difference; on the basis of the current temperature difference and a temperature difference calculated at a previous control moment, determining a temperature difference change value; on the basis of the current temperature difference and the temperature difference change value, determining a target water temperature adjustment amount of the water chilling unit; and determining a target water temperature of the water chilling unit according to the target water temperature adjustment amount, and controlling the water chilling unit to operate according to the target water temperature.

FIG. 2

EP 4 553 394 A1

## Description

The present application claims priority to Chinese Patent Application No. 202211217919.7, filed on September 30, 2022, the entire content of which are incorporated herein by reference.

## TECHNICAL FIELD

The present application relates to the technical field of air conditioners, and in particular to a condensation prevention control method, a condensation prevention control apparatus, a condensation prevention control device and a storage medium.

## BACKGROUND

When the radiant air conditioning water system is cooling, the target water supply temperature of the heat pump chiller is generally set higher, and the set rise value is fixed to prevent condensation on the radiant surface. However, this method may lead to poor cooling effect and fail to reduce the room air temperature to the user set value, resulting in poor user experience.

At present, there is also a condensation prevention control method: determining whether there is a condensation risk on the radiant surface based on the radiant surface temperature and dew point temperature, and performing system protection shutdown and risk warning. However, this method is not suitable for environments with high humidity. In high-humidity conditions, the system may be shut down for a long time due to the determination of condensation risk, resulting in the user being unable to use the air conditioner normally.

The above contents are only used to assist in understanding the technical solution of the present application, and do not constitute an admission that the above contents are related art.

## SUMMARY

### TECHNICAL PROBLEM

The main purpose of the present application is to provide a condensation prevention control method, a condensation prevention control apparatus, a condensation prevention control device and a storage medium, aiming to solve the technical problems that the current condensation prevention control method cannot reduce the room air temperature to the user-set value and the system shuts down for a long time due to determination of condensation risk in high-humidity environments.

### TECHNICAL SOLUTION

To achieve the above objective, the present application provides a condensation prevention control method, applied to a radiant air conditioning water system. The radiant air conditioning water system includes a chiller and a terminal heat exchange component. The condensation prevention control method includes:

    obtaining a water supply temperature of the chiller and a dew point temperature of a space where the terminal heat exchange component is located in a cooling mode;
    calculating a current temperature difference according to the water supply temperature and the dew point temperature;
    determining a temperature difference change value according to the current temperature difference and a temperature difference calculated at a previous control moment;
    determining a target water temperature adjustment amount of the chiller according to the current temperature difference and the temperature difference change value; and
    determining a target water temperature of the chiller according to the target water temperature adjustment amount, and controlling the chiller to operate at the target water temperature.

In an embodiment, the determining the target water temperature adjustment amount of the chiller according to the current temperature difference and the temperature difference change value includes:

    determining a first interval in which the temperature difference is located and a second interval in which the temperature difference change value is located; and
    determining the target water temperature adjustment amount of the chiller according to the first interval and the second interval.

In an embodiment, the calculating the current temperature difference according to the water supply temperature and the dew point temperature includes:

    correcting the water supply temperature according to a heat exchange temperature difference corresponding to the terminal heat exchange component to obtain a corrected water supply temperature; and
    calculating the current temperature difference according to the corrected water supply temperature and the dew point temperature.

In an embodiment, before the correcting the water supply temperature according to the heat exchange temperature difference corresponding to the terminal heat exchange component to obtain the corrected water supply temperature, the method further includes:

    determining a radiation terminal type corresponding to the terminal heat exchange component; and

determining the heat exchange temperature difference corresponding to the terminal heat exchange component according to the radiation terminal type.

In an embodiment, the determining the target water temperature of the chiller according to the target water temperature adjustment amount includes:
determining the target water temperature of the chiller according to a current target water temperature, a current actual water supply temperature, a target water temperature calculated at the previous control moment, and the target water temperature adjustment amount.

In an embodiment, the radiation air conditioning water system includes multiple terminal heat exchange components,
the method further including:

> obtaining target water temperatures corresponding to the multiple terminal heat exchange components;
> determining a comprehensive control target water temperature according to the multiple target water temperatures; and
> controlling the chiller to operate at the comprehensive control target water temperature.

In an embodiment, after the calculating the current temperature difference according to the water supply temperature and the dew point temperature, the method further includes:

> determining an adjustment interval duration according to an interval in which the temperature difference is located; and
> determining next control moment according to a current moment and the adjustment interval duration.

In an embodiment, after the calculating the current temperature difference according to the water supply temperature and the dew point temperature, the method further includes:

> determining whether the current temperature difference and a current operating time meet preset conditions;
> in response to that the current temperature difference and the current operating time meet the preset conditions, entering condensation prevention target water temperature adjustment, and determining the temperature difference change value according to the current temperature difference and the temperature difference calculated at the previous control moment.

In an embodiment, the determining whether the current temperature difference and the current operating time meet the preset conditions includes: determining whether the current temperature difference is less than or equal to a first preset value, and determining whether the current operating time is greater than a first preset time.

In an embodiment, the condensation prevention control method further includes:
in response to that a temperature difference between the water supply temperature and the dew point temperature is continuously detected to be greater than a second preset value during a second preset time, exiting the condensation prevention target water temperature adjustment.

In an embodiment, the condensation prevention control method further includes:
in response to that a temperature difference between the water supply temperature and the dew point temperature is continuously detected to be less than or equal to a third preset value during a third preset time, entering shutdown protection, and issuing a condensation protection fault reminder.

Besides, in order to achieve the above objective, the present application further provides a condensation prevention control apparatus, applied to a radiation air conditioning water system, the radiation air conditioning water system including a chiller and a terminal heat exchange component, the condensation prevention control apparatus including:

> an obtaining module, configured to obtain a water supply temperature of the chiller and a dew point temperature of a space where the terminal heat exchange component is located in a cooling mode;
> a calculation module, configured to calculate a current temperature difference according to the water supply temperature and the dew point temperature, and
> the calculation module also configured to determine a temperature difference change value according to the current temperature difference and a temperature difference calculated at a previous control moment;
> a determination module, configured to determine a target water temperature adjustment amount of the chiller according to the current temperature difference and the temperature difference change value; and
> a control module, configured to determine a target water temperature of the chiller according to the target water temperature adjustment amount and control the chiller to operate at the target water temperature.

Besides, in order to achieve the above objective, the present application further provides a condensation prevention control device, including: a memory, a processor, and a condensation prevention control program stored in the memory and executable on the processor, the condensation prevention control program is configured to implement the condensation prevention control method as described above.

Besides, in order to achieve the above objective, the present application further provides a storage medium, a condensation prevention control program is stored in the storage medium, and when the condensation prevention control program is executed by a processor, the condensation prevention control method as described above is implemented.

**BENIFICIAL EFFECT**

In the present application, the corresponding control parameters are determined according to the temperature difference between the water supply temperature and the dew point temperature and the temperature difference change value, to realize the adaptive adjustment of the target water temperature of the chiller, avoid the condensation problem on the radiation surface while ensuring the cooling effect, and make the condensation prevention control more accurate and effective.

**BRIEF DESCRIPTION OF THE DRAWINGS**

FIG. 1 is a schematic structural diagram of a condensation prevention control device in a hardware operating environment involved in the embodiment of the present application.

FIG. 2 is a schematic flow chart of the condensation prevention control method according to a first embodiment of the present application.

FIG. 3 is a schematic diagram of a radiation air conditioning water system of the condensation prevention control method according to the present application.

FIG. 4 is a schematic flow chart of the condensation prevention control method according to a second embodiment of the present application.

FIG. 5 is a schematic flow chart of the condensation prevention control method according to a third embodiment of the present application.

FIG. 6 is a schematic diagram of a cooling mode control process of the condensation prevention control method according to the present application.

FIG. 7 is a structural block diagram of a condensation prevention control apparatus according to the first embodiment of the present application.

The realization of the purpose, functional features and advantages of the present application will be further described in conjunction with the embodiments, with reference to the accompanying drawings.

**DETAILED DESCRIPTION OF EMBODIMENTS**

It should be understood that the specific embodiments described here are only used to explain the present application and are not used to limit the present application.

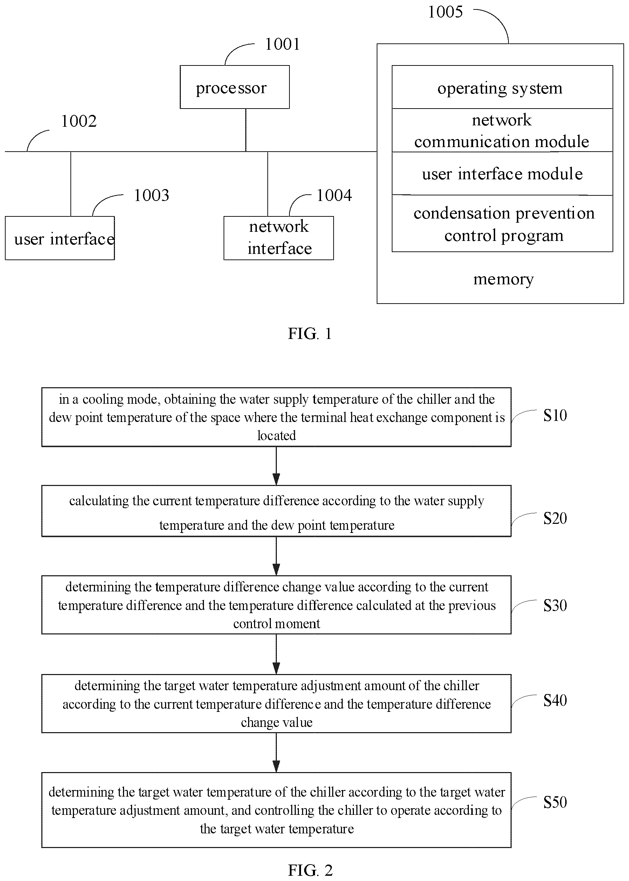

As shown in FIG. 1, FIG. 1 is a schematic structural diagram of a condensation prevention control device in a hardware operating environment involved in an embodiment of the present application.

As shown in FIG. 1, the condensation prevention control device can include: a processor 1001, such as a central processing unit (CPU), a communication bus 1002, a user interface 1003, a network interface 1004, and a memory 1005. The communication bus 1002 is configured to implement connection communication between these components. The user interface 1003 can include a display screen (display) and an input unit such as a keyboard. The user interface 1003 can also include a standard wired interface and a wireless interface. The network interface 1004 can include a standard wired interface and a wireless interface (such as a Wi-Fi interface). The memory 1005 can be a high-speed random access memory (RAM), or a stable non-volatile memory (NVM), such as a disk memory. The memory 1005 can also be a storage device independent of the aforementioned processor 1001.

Those skilled in the art can understand that the structure shown in FIG. 1 does not constitute a limitation on the condensation prevention control device, and can include more or less components than shown, or combinations of certain components, or components arranged differently.

As shown in FIG. 1, the memory 1005 as a storage medium can include an operating system, a network communication module, a user interface module and a condensation prevention control program.

In the condensation prevention control device shown in FIG. 1, the network interface 1004 is mainly used for data communication with the network server; the user interface 1003 is mainly used for data interaction with the user; and the processor 1001 and the memory 1005 in the condensation prevention control device of the present application can be provided in the condensation prevention control device. The condensation prevention control device calls the condensation prevention control program stored in the memory 1005 through the processor 1001, and executes the condensation prevention control method provided in the embodiment of the present application.

The embodiments of the present application provides a condensation prevention control method, referring to FIG. 2, which is a flow chart of the condensation prevention control method according to a first embodiment of the present application.

In an embodiment, the condensation prevention control method is applied to a radiation air conditioning water system, the radiation air conditioning water system includes a chiller and a terminal heat exchange component, and the condensation prevention control method includes:

step S10, in a cooling mode, obtaining the water supply temperature of the chiller and the dew point temperature of the space where the terminal heat exchange component is located.

It can be understood that the execution subject of this embodiment may be a condensation prevention control device, and the condensation prevention control device may be a controller for controlling the operating state of the chiller, or other devices with the same or similar functions.

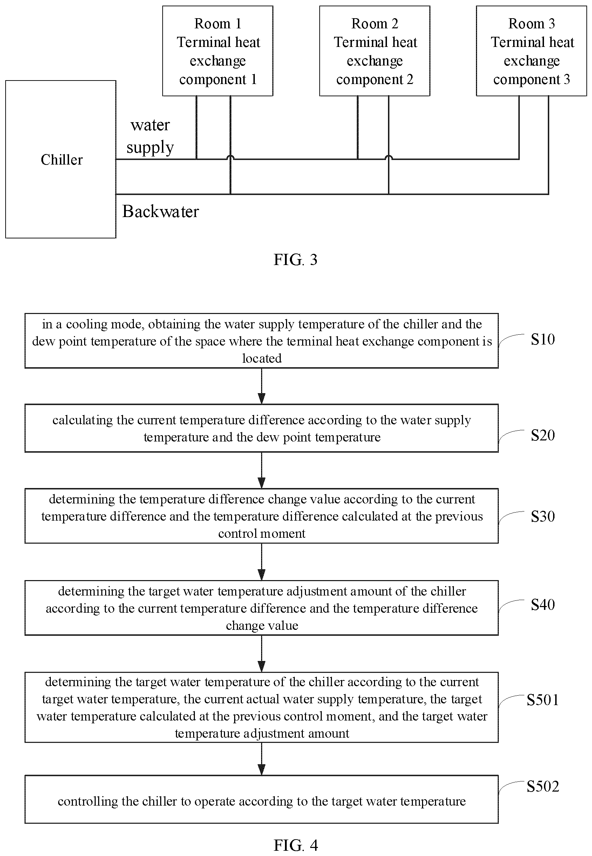

It should be noted that the radiation air conditioning water system of this embodiment includes one or more terminal heat exchange components. Referring to FIG. 3, which is a schematic diagram of the radiation air conditioning water system of the condensation prevention control method according to the present application. The radiation air conditioning water system mainly includes a heat pump chiller and a terminal heat exchange component. The terminal heat exchange component is provided in the room, including radiation heat exchange forms such as radiation plates and capillary networks. The heat pump chiller produces cold water and transports it to the terminal heat exchange component in the room for cooling the room.

It should be understood that in the cooling mode, the chiller produces cold water and delivers it to the terminal heat exchange component. A temperature sensor is provided at the water supply port of the chiller to obtain the temperature signal collected by the temperature sensor. The temperature signal is analyzed to obtain the water supply temperature. In another embodiment, the water supply temperature of the chiller can be replaced by the terminal water inlet temperature. A temperature sensor is provided at the water inlet of the terminal heat exchange component, and the temperature signal collected by the temperature sensor is analyzed to obtain the terminal water inlet temperature.

It should be noted that the space where the terminal heat exchange component is located refers to the room or indoor area where the terminal heat exchange component is deployed. A dew point temperature sensor is provided in the room, and the dew point temperature in the room is obtained through the dew point temperature sensor. Multiple dew point temperature sensors are provided in the same room, and the temperature data collected by the multiple dew point temperature sensors are obtained. The maximum value is selected from the multiple temperature data as the dew point temperature of the room. A humidity sensor is provided in the room to detect the relative humidity in the room, and the dew point temperature in the room is calculated based on the air temperature and relative humidity.

Step S20, calculating the current temperature difference according to the water supply temperature and the dew point temperature.

It should be understood that the current temperature difference is calculated according to the following formula:

$$D = TW - Tdew\_Rn;$$

where D represents the current temperature difference, TW represents the water supply temperature, and Tdew_Rn represents the dew point temperature.

In an embodiment, to avoid misjudgment of condensation risk, step S20 includes: correcting the water supply temperature according to the heat exchange temperature difference corresponding to the terminal heat exchange component to obtain a corrected water supply temperature; and calculating the current temperature difference according to the corrected water supply temperature and the dew point temperature.

It should be noted that the heat exchange temperature difference of the terminal heat exchange component is a preset value. The terminal heat exchange component is calibrated in advance, the heat exchange temperature difference is calculated and stored, and the water supply temperature is corrected based on the stored heat exchange temperature difference. The water inlet and outlet of the terminal heat exchange component are both provided with temperature sensors, and the heat exchange temperature difference is calculated according to the collected terminal water inlet temperature and terminal water outlet temperature.

In an embodiment, the current temperature difference is calculated according to the following formula:

$$D = TW + TS - Tdew\_Rn;$$

where D represents the current temperature difference, TW represents the water supply temperature, TS represents the heat exchange temperature difference, and Tdew_Rn represents the dew point temperature.

In an embodiment, before the correcting the water supply temperature according to the heat exchange temperature difference corresponding to the terminal heat exchange component to obtain the corrected water supply temperature, the method further includes: determining the radiation terminal type corresponding to the terminal heat exchange component; and determining the heat exchange temperature difference corresponding to the terminal heat exchange component according to the radiation terminal type.

It should be understood that the heat exchange temperature difference of the terminal heat exchange component is a different parameter preset according to different radiation terminal types. The radiation terminal types include metal radiation plate terminals, gypsum radiation plate terminals, capillary network radiation terminals, etc. After determining the radiation terminal type of the terminal heat exchange component, the heat exchange temperature difference of the terminal heat exchange component is set as the preset value of the corresponding terminal type. For example, the preset value of the heat exchange temperature difference corresponding to the metal radiation plate terminal is TS1, the preset value of the heat exchange temperature difference corresponding to the gypsum radiation plate terminal is TS2, and the preset value of the heat exchange temperature difference corresponding to the capillary network radiation terminal is TS3, etc. After determining that the radiation terminal type corresponding to the terminal heat exchange component is the metal radiation plate terminal, the heat exchange temperature difference of the terminal heat exchange component is set to TS1. Different control parameters are adopted according to different radiation terminal types to make the control more accurate and effective, and further avoid misjudgment of condensation risk.

Step S30, determining the temperature difference change value according to the current temperature difference and the temperature difference calculated at the previous control moment.

It should be noted that the temperature difference change value between the water supply temperature and the room dew point temperature is calculated at intervals of a certain period of time: $\Delta D=D(n)-D(n-1)$. Specifically, multiple control moments are set, and the temperature difference between the water supply temperature and the room dew point temperature is calculated at each control moment. The change in this temperature difference is calculated based on the temperature difference determined at two adjacent control moments. The interval between two adjacent control moments is a fixed duration.

In an embodiment, after step S20, the method further includes: determining the adjustment interval duration according to the interval in which the temperature difference is located; and determining the next control moment according to the current moment and the adjustment interval duration.

In an embodiment, the adjustment interval duration between two adjacent control moments is determined according to the interval in which the temperature difference is located. A preset key-value pair is set in advance. The key is a plurality of temperature difference intervals, and the value is a preset interval duration value. The key-value pair is searched according to the temperature difference, the interval in which the temperature difference is located is determined, the corresponding value is searched according to the key, the adjustment interval duration is obtained, the next control moment is determined according to the current moment and the adjustment interval duration, and the steps S10-S50 are executed again at the next control moment to form a loop control. For example, multiple key-value pairs are set as: first interval-first preset duration value, second interval-second preset duration value, third interval-third preset duration value. If the temperature difference belongs to the first interval, the determined adjustment interval duration is the first preset duration value.

Step S40, determining the target water temperature adjustment amount of the chiller according to the current temperature difference and the temperature difference change value.

It can be understood that a preset adjustment amount table is set in advance, and the preset adjustment amount table includes two dimensions: temperature difference and temperature difference change value. In an embodiment, the preset adjustment amount table is queried based on the currently calculated temperature difference and temperature difference change value to determine the corresponding target water temperature adjustment amount.

Specifically, step S40 includes: determining the first interval where the temperature difference is located and the second interval where the temperature difference change value is located; and determining the target water temperature adjustment amount of the chiller according to the first interval and the second interval.

In an embodiment, a preset adjustment amount table is set in advance, and the preset adjustment amount table includes two dimensions: a temperature difference interval and a temperature difference change value interval. The currently calculated temperature difference is matched with a plurality of temperature difference intervals in the preset adjustment amount table to determine the first interval in which the temperature difference is located. The currently calculated temperature difference change value is matched with a plurality of temperature difference change value intervals in the preset adjustment amount table to determine the second interval in which the temperature difference change value is located. The corresponding target water temperature adjustment amount in the preset adjustment amount table is determined according to the difference between the first interval and the second interval.

Step S50, determining the target water temperature of the chiller according to the target water temperature adjustment amount, and controlling the chiller to operate according to the target water temperature.

It should be noted that the target water temperature of the chiller is calculated according to the target water temperature adjustment amount and the current set water temperature, and the chiller is controlled according to the target water temperature to modulate the cold water of the corresponding temperature and deliver it to the terminal heat exchange component.

In the present application, the corresponding control parameters are determined according to the temperature difference between the water supply temperature and the dew point temperature and the temperature difference change value, to realize the adaptive adjustment of the target water temperature of the chiller, avoid the condensation problem on the radiation surface while ensuring the cooling effect, and make the condensation prevention control more accurate and effective.

Referring to FIG. 4, which is a flow chart of the condensation prevention control method according to a second embodiment of the present application.

Based on the above first embodiment, step S50 includes:

step S501, determining the target water temperature of the chiller according to the current target water temperature, the current actual water supply temperature, the target water temperature calculated at the previous control moment, and the target water temperature adjustment amount.

It can be understood that the current target water temperature is the water supply temperature calculated according to the room set temperature, the current actual water supply temperature is the temperature collected by the temperature sensor provided at the water supply port of the chiller or the temperature collected by the temperature sensor at the water inlet of the terminal heat exchange component, and the target water temperature calculated at the previous control moment is the temperature calculated according to the method proposed in this embodiment at the previous control moment.

Specifically, when the target water temperature adjustment amount $\Delta TWS \geq 0$, the target water temperature is determined as follows: $TWS(n) = TWS(n-1) + \Delta TWS$, where $TWS(n)$ is the target water temperature and $TWS(n-1)$ is the target water temperature calculated at the previous control moment. When the target water temperature adjustment amount $\Delta TWS < 0$, the target water temperature is determined as follows: $TWS(n) = \min\{TWS(n-1), TWS0, TW0\} + \Delta TWS$, where $TWS0$ is the current target water temperature and $TW0$ is the current actual water supply temperature. That is, the minimum temperature value among the current target water temperature, the current actual water supply temperature and the target water temperature calculated at the previous control moment is selected, and the target water temperature is obtained by adding the minimum temperature value to the target water temperature adjustment amount.

Step S502, controlling the chiller according to the target control water temperature.

In an embodiment, the radiation air conditioning water system includes multiple terminal heat exchange components, and the method further includes: obtaining the target water temperatures corresponding to the multiple terminal heat exchange components; determining the comprehensive control target water temperature according to the multiple target water temperatures; and controlling the chiller to operate according to the comprehensive control target water temperature.

It should be noted that the chiller cools multiple rooms at the same time, and each room determines a target water temperature according to steps S10-S50 and S501, and determines the comprehensive control target water temperature according to the multiple target water temperatures. The average value of the multiple target water temperatures is taken as the comprehensive control target water temperature. Alternatively, the minimum value of the multiple target water temperatures is taken as the comprehensive control target water temperature.

In the present application, the corresponding control parameters are determined according to the temperature difference between the water supply temperature and the dew point temperature and the temperature difference change value. The target water temperature is determined based on the current target water temperature, the current actual water supply temperature, and the target water temperature calculated at the previous control moment, to realize the adaptive adjustment of the target water temperature of the chiller. While ensuring the cooling effect, the condensation problem on the radiation surface is avoided, making the condensation prevention control more accurate and effective.

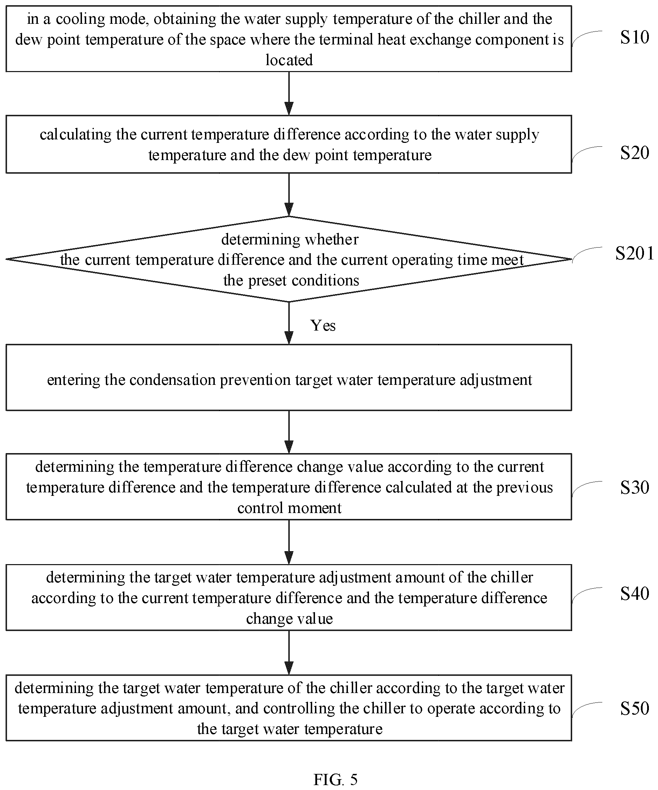

Referring to FIG. 5, which is a flow chart of the condensation prevention control method according to a third embodiment of the present application.

Based on the above first embodiment, after step S20, the condensation prevention control method of this embodiment further includes:

step S201, determining whether the current temperature difference and the current operating time meet a preset condition.

It can be understood that, based on the current temperature difference and the current operating time, it is determined whether there is a condensation risk in the current air-conditioning operation scene. Specifically, the determining whether the current temperature difference and the current operating time meet the preset condition includes: determining whether the current temperature difference is less than or equal to a first preset value, and determining whether the current operating time is greater than a first preset time. When the current temperature difference is less than or equal to the first preset value and the current operating time is greater than the first preset time, the preset condition is met, and it is determined that there is a condensation risk in the current air-conditioning operation scene. When the current temperature difference is greater than the first preset value or the current operating time is less than or equal to the first preset time, the preset condition is not met, and it is determined that there is no condensation risk in the current air-conditioning operation scene.

If the current temperature difference and the current operating time meet the preset condition, the condensation prevention target water temperature is adjusted and step S30 is executed.

It should be noted that when there is a condensation risk in the current air-conditioning operation scenario, the chiller enters the condensation prevention target water temperature adjustment, determines the control parameters according to the temperature difference and the temperature difference change value, and controls the chiller. If the current temperature difference and the current operating time do not meet the preset conditions, the steps S10-S50 are executed again at the next control moment, and whether there is a condensation risk is determined again according to the temperature difference and the operating time.

In an embodiment, the method further includes: if the temperature difference between the water supply temperature and the dew point temperature is continuously detected to be greater than the second preset value during the second preset time, the condensation prevention target water temperature adjustment is exited.

In an embodiment, the method further includes: if the temperature difference between the water supply temperature and the dew point temperature is continuously detected to be less than or equal to the third preset value during the third preset time, the shutdown protection is entered, and the condensation protection fault reminder is performed.

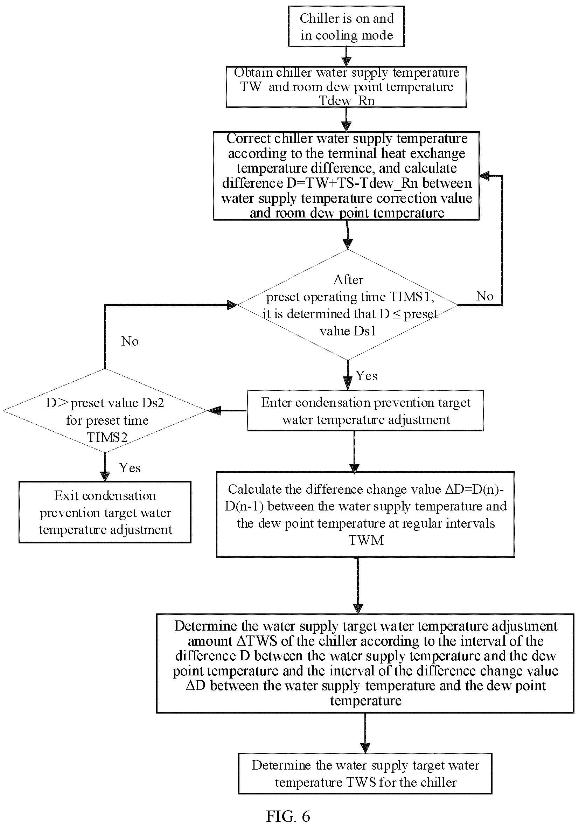

It should be understood that, with reference to FIG. 6, FIG. 6 is a schematic diagram of a cooling mode control process of the condensation prevention control method according to the present application. After the operating time is greater than the first preset time TIMS1, it is determined whether the temperature difference D is less than or equal to the first preset value Ds1. If the temperature difference D is less than or equal to the first preset value Ds1, the condensation prevention target water temperature adjustment is entered. If the temperature difference D between the water supply temperature and the dew point temperature is continuously detected to be greater than the second preset value Ds2 during the second preset time TIMS2, the condensation prevention target water temperature adjustment mode is exited. If the temperature difference between the water supply temperature and the dew point temperature is continuously detected to be less than or equal to the third preset value Ds3 during the third preset time TIMS3, the shutdown protection is entered, and a condensation protection fault reminder is issued to avoid further condensation on the radiation surface. The first preset value, the second preset value, the third preset value, the first preset time, the second preset time and the third preset time are parameter values pre-set in the controller in advance according to the specific air conditioner model combined with the test results and the calculation results.

In the present application, the condensation risk is determined according to the temperature difference between the water supply temperature and the room dew point temperature, as well as the operating time, which avoids the misjudgment of the condensation risk. When there is a risk, the target water temperature is adjusted and controlled to ensure the cooling effect while avoiding the condensation problem on the radiation surface. The corresponding control parameters are determined according to the calculated temperature difference and the temperature difference change value, making the condensation prevention control more accurate and effective.

In addition, the embodiment of the present application also proposes a storage medium, on which a condensation prevention control program is stored, and when the condensation prevention control program is executed by the processor, the condensation prevention control method described above is implemented.

Since the storage medium adopts all the technical solutions of the above embodiments, it at least has all the beneficial effects brought by the technical solutions of the above embodiments, which will not be repeated here.

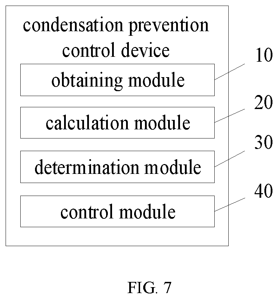

Referring to FIG. 7, which is a structural block diagram of the condensation prevention control device according to the first embodiment of the present application.

As shown in FIG. 7, the condensation prevention control device proposed in the embodiment of the present application is applied to a radiation air conditioning water system, and the radiation air conditioning water system includes a chiller and a terminal heat exchange component. The condensation prevention control device includes an obtaining module 10, a calculation module 20, a determination module 30 and a control module 40.

The obtaining module 10 is configured to obtain the water supply temperature of the chiller and the dew point temperature of the space where the terminal heat exchange component is located in the cooling mode.

It should be noted that the radiation air-conditioning water system of this embodiment includes one or more terminal heat exchange components. Referring to FIG. 3, which is a schematic diagram of the radiation air-conditioning water system of the condensation prevention control method according to the present application. The radiation air-conditioning water system mainly includes two parts: a heat pump chiller and a terminal heat exchange component. The terminal heat exchange component is provided in the room, including radiation plates, capillary networks and other radiation heat exchange forms. The heat pump chiller produces cold water and transports it to the terminal heat exchange component in the room for cooling the room.

It should be understood that in the cooling mode, the chiller produces cold water and delivers it to the terminal heat exchange component. A temperature sensor is provided at the water supply port of the chiller to obtain the temperature signal collected by the temperature sensor, and the temperature signal is analyzed to obtain the water supply temperature. In another embodiment, the water supply temperature of the chiller can be replaced by the terminal water inlet temperature. A temperature sensor is provided at the water inlet of the terminal heat exchange component, and the temperature signal collected by the temperature sensor is analyzed to obtain the terminal water inlet temperature.

It should be noted that the space where the terminal heat exchange component is located refers to the room or indoor area where the terminal heat exchange component is deployed. A dew point temperature sensor is provided in the room, and the dew point temperature in the room is obtained through the dew point temperature sensor. Multiple dew point temperature sensors are provided in the same room, and the temperature data collected by multiple dew point temperature sensors is obtained. The maximum value is selected from the multiple temperature data as the dew point temperature of the room. A humidity sensor is provided in the room to detect the relative humidity in the room. The dew point temperature in the room is calculated based on the air temperature and relative humidity.

The calculation module 20 is configured to calculate the current temperature difference according to the water supply temperature and the dew point temperature.

It should be understood that the current temperature difference is calculated according to the following formula:

$$D = TW - Tdew\_Rn;$$

where D represents the current temperature difference, TW represents the water supply temperature, and Tdew_Rn represents the dew point temperature.

In an embodiment, to avoid misjudgment of condensation risk, the calculation module 20 is also configured to correct the water supply temperature according to the heat exchange temperature difference corresponding to the terminal heat exchange component to obtain the corrected water supply temperature; and calculate the current temperature difference according to the corrected water supply temperature and the dew point temperature.

It should be noted that the heat exchange temperature difference of the terminal heat exchange component is a preset value. The terminal heat exchange component is calibrated in advance, the heat exchange temperature difference is calculated and stored, and the water supply temperature is corrected based on the stored heat exchange temperature difference. The water inlet and outlet of the terminal heat exchange component are both provided with temperature sensors, and the heat exchange temperature difference is calculated based on the collected terminal water inlet temperature and terminal water outlet temperature.

In an embodiment, the current temperature difference is calculated according to the following formula:

$$D = TW + TS - Tdew\_Rn;$$

where D represents the current temperature difference, TW represents the water supply temperature, TS represents the heat exchange temperature difference, and Tdew_Rn represents the dew point temperature.

In an embodiment, the calculation module 20 is also configured to determine the radiation terminal type corresponding to the terminal heat exchange component; and determine the heat exchange temperature difference corresponding to the terminal heat exchange component according to the radiation terminal type.

It should be understood that the heat exchange temperature difference of the terminal heat exchange component is a different parameter preset according to different radiation terminal types, and the radiation terminal types include metal radiation plate terminals, gypsum radiation plate terminals, capillary network radiation terminals, etc. After determining the radiation terminal type of the terminal heat exchange component, the heat exchange temperature difference of the terminal heat exchange component is taken as the preset value of the corresponding terminal type. For example, the preset value of the heat exchange temperature difference corresponding to the metal radiation plate terminal is TS1, the preset value of the heat exchange temperature difference corresponding to the gypsum radiation plate terminal is TS2, and the preset value of the heat exchange temperature difference corresponding to the capillary network radiation terminal is TS3. After determining that the radiation terminal type corresponding to the terminal heat exchange component is the metal radiation plate terminal, the heat exchange temperature difference of the terminal heat exchange component is set to TS1. In the present application, different control parameters are adopted according to different radiation terminal types to make the control more accurate and effective, and further avoid the misjudgment of condensation risk.

The calculation module 20 is also configured to determine the temperature difference change value according to the current temperature difference and the temperature difference calculated at the previous control moment.

It should be noted that the temperature difference change value between the water supply temperature and the room dew point temperature is calculated at intervals: $\Delta D = D(n) - D(n-1)$. Specifically, multiple control moments are set, and the temperature difference between the water supply temperature and the room dew point temperature is calculated at each control moment, and the temperature difference change value is calculated based on the temperature difference determined at two adjacent control moments. The interval between two adjacent control moments is a fixed duration.

In an embodiment, the calculation module 20 is also configured to determine the adjustment interval duration according to the interval in which the temperature difference is located, and determine the next control moment according to the current moment and the adjustment interval duration.

In the present application, the adjustment interval duration between two adjacent control moments is determined according to the interval in which the temperature difference is located. In an embodiment, a preset key-value pair is set in advance, the key is a plurality of temperature difference intervals, and the value is a preset value for the interval duration. The key-value pair is searched according to the temperature difference, the interval in which the temperature difference is located is determined, the corresponding value is searched according to the key, the adjustment interval duration is obtained, the next control moment is determined according to the current moment and the adjustment interval duration, and the steps S10-S50 are performed again at the next control moment to form a loop control. For example, multiple key-value pairs are set as: the first interval-the first duration preset value, the second interval-the second duration preset value, and the third interval-the third duration preset value. If the temperature difference belongs to the first interval, the determined adjustment interval duration is the first duration preset value.

The determination module 30 is configured to determine the target water temperature adjustment amount of the chiller according to the current temperature difference and the temperature difference change value.

It can be understood that a preset adjustment amount table is set in advance, and the preset adjustment amount table includes two dimensions: temperature difference and temperature difference change value. In an embodiment, the preset adjustment amount table is queried based on the currently calculated temperature difference and the temperature difference change value to determine the corresponding target water temperature adjustment amount.

Specifically, the determination module 30 is also configured to determine the first interval where the temperature difference is located and the second interval where the temperature difference change value is located, and determine the target water temperature adjustment amount of the chiller according to the first interval and the second interval.

In an embodiment, the preset adjustment amount table is set in advance, and the preset adjustment amount table includes two dimensions: temperature difference interval and temperature difference change value interval. In an embodiment, the currently calculated temperature difference is matched with multiple temperature difference intervals in the preset adjustment amount table to determine the first interval in which the temperature difference is located. The currently calculated temperature difference change value is matched with multiple temperature difference change value intervals in the preset adjustment amount table to determine the second interval in which the temperature difference change value is located. The corresponding target water temperature adjustment amount in the preset adjustment amount table is determined according to the first interval and the second interval.

The control module 40 is configured to determine the target water temperature of the chiller according to the target water temperature adjustment amount, and control the chiller to operate according to the target water temperature.

It should be noted that the target water temperature of the chiller is calculated according to the target water temperature adjustment amount and the current set water temperature, and the chiller is controlled according to the target water temperature to modulate the cold water of the corresponding temperature and deliver it to the terminal heat exchange component.

It should be understood that the above are only an example and does not constitute any limitation on the technical solution of the present application. In specific applications, those skilled in the art can make settings as needed, which is not limited in the present application.

In the present application, the corresponding control parameters are determined according to the temperature difference between the water supply temperature and the dew point temperature, as well as the temperature difference change value, enabling adaptive adjustment of the target water temperature of the chiller. This ensures the cooling effect while avoiding the condensation problem on the radiation surface, making the condensation prevention control more accurate and effective.

It should be noted that the workflow described above is only illustrative and does not limit the scope of the present application. In practical applications, those skilled in the art can select a part or all of them according to actual needs to achieve the purpose of this embodiment, and no limitation is made here.

In addition, for technical details not fully described in the present application, please refer to the condensation prevention control method provided in any embodiment of the present application, which will not be repeated here.

It should be noted that, as used herein, the terms "include", "comprise" or any other variation thereof are intended to cover a non-exclusive inclusion, such that a process, method, article or system that includes a series of elements includes not only those elements, but further includes other elements not explicitly listed, or further includes elements inherent to such process, method, article or system. In the absence of more restrictions, an element defined by the statement "includes a ..." does not exclude the presence of other identical elements in the process, method, article or system that includes the element.

The above serial numbers of the embodiments of the present application are only for description and do not represent the advantages or disadvantages of the embodiments.

Through the above description of the embodiments, those skilled in the art can clearly understand that the methods of the above embodiments can be implemented by means of software plus the necessary general hardware platform, of course, also by hardware, but in many cases the former is better. Based on this understanding, the technical solution of the present application, in essence, or a part that contributes to the related art, can be embodied in the form of a software product. The computer software product is stored in the storage medium (such as ROM/RAM, magnetic disk, optical disk) as described above, including several instructions to cause a terminal device (which can be a mobile phone, computer, server, or network device, etc.) to execute the methods described in various embodiments of the present application.

The above are only some embodiments of the present application, and are not intended to limit the scope of the present application. Any equivalent structure or equivalent process transformation made using the contents of the description and drawings of the present application, or directly or indirectly applied in other related technical fields, are included in the scope of the present application.

**Claims**

1. A condensation prevention control method, applied to a radiation air conditioning water system, the radiation air conditioning water system comprising a chiller and a terminal heat exchange component, the condensation prevention control method comprising:

    obtaining a water supply temperature of the chiller and a dew point temperature of a space where the terminal heat exchange component is located in a cooling mode;
    calculating a current temperature difference according to the water supply temperature and the dew point temperature;
    determining a temperature difference change value according to the current temperature difference and a temperature difference calculated at a previous control moment;
    determining a target water temperature adjustment amount of the chiller according to the current temperature difference and the temperature difference change value; and
    determining a target water temperature of the chiller according to the target water temperature adjustment amount, and controlling the chiller to operate at the target water temperature.

2. The condensation prevention control method according to claim 1, wherein the determining the target water temperature adjustment amount of the chiller according to the current temperature difference and the temperature difference change value comprises:

    determining a first interval in which the temperature difference is located and a second interval in which the temperature difference change value is located; and
    determining the target water temperature adjustment amount of the chiller according to the first interval and the second interval.

3. The condensation prevention control method according to claim 1, wherein the calculating the current temperature difference according to the water supply temperature and the dew point temperature comprises:

    correcting the water supply temperature according to a heat exchange temperature difference corresponding to the terminal heat exchange component to obtain a corrected water supply temperature; and
    calculating the current temperature difference according to the corrected water supply temperature and the dew point temperature.

4. The condensation prevention control method according to claim 3, wherein before the correcting the water supply temperature according to the heat exchange temperature difference corresponding to the terminal heat exchange component to obtain the corrected water supply temperature, the method further comprises:

    determining a radiation terminal type corresponding to the terminal heat exchange component; and
    determining the heat exchange temperature difference corresponding to the terminal heat exchange component according to the radiation terminal type.

5. The condensation prevention control method according to any one of claims 1 to 4, wherein the determining the target water temperature of the chiller according to the target water temperature adjustment amount comprises:
determining the target water temperature of the chiller according to a current target water temperature, a current actual water supply temperature, a target water temperature calculated at the previous control moment, and the target water temperature adjustment amount.

6. The condensation prevention control method according to claim 5, wherein the radiation air conditioning water system comprises multiple terminal heat exchange components,
the method further comprising:

    obtaining target water temperatures corresponding to the multiple terminal heat exchange components respectively;
    determining a comprehensive control target water temperature according to the multiple target water temperatures; and
    controlling the chiller to operate at the comprehensive control target water temperature.

7. The condensation prevention control method according to any one of claims 1 to 4, wherein after the calculating the current temperature difference according to the water supply temperature and the dew point temperature, the method further comprises:

    determining an adjustment interval duration according to an interval in which the temperature difference is located; and
    determining a next control moment according to a current moment and the adjustment interval duration.

8. The condensation prevention control method according to any one of claims 1 to 4, wherein after the calculating the current temperature difference according to the water supply temperature and the dew point temperature, the method further comprises:

    determining whether the current temperature difference and a current operating time meet preset conditions;
    in response to that the current temperature difference and the current operating time meet the preset conditions, entering condensation prevention target water temperature adjustment, and determining the temperature difference change value according to the current temperature difference and the temperature difference calculated at the previous control moment.

9. The condensation prevention control method according to claim 8, wherein the determining whether the current temperature difference and the current operating time meet the preset conditions comprises: determining whether the current temperature difference is less than or equal to a first preset value, and determining whether the current operating time is greater than a first preset time.

10. The condensation prevention control method according to claim 9, further comprising:
in response to that a temperature difference between the water supply temperature and the dew point temperature is continuously detected to be greater than a second preset value during a second preset time, exiting the condensation prevention target water temperature adjustment.

11. The condensation prevention control method according to claim 9, further comprising:
in response to that a temperature difference between the water supply temperature and the dew point temperature is continuously detected to be less than or equal to a third preset value during a third preset time, entering shutdown protection, and issuing a condensation protection fault reminder.

12. A condensation prevention control apparatus, applied to a radiation air conditioning water system, the radiation air conditioning water system comprising a chiller and a terminal heat exchange component, the condensation prevention control apparatus comprising:

    an obtaining module, configured to obtain a water supply temperature of the chiller and a dew point temperature of a space where the terminal heat exchange component is located in a cooling mode;
    a calculation module, configured to calculate a current temperature difference according to the water supply temperature and the dew point temperature, and also configured to determine a temperature difference change value according to the current temperature difference and a temperature difference calculated at a previous control moment;
    a determination module, configured to determine a target water temperature adjustment amount of the chiller according to the current temperature difference and the temperature difference change value; and
    a control module, configured to determine a target water temperature of the chiller according to the target water temperature adjustment amount and control the chiller to operate at the target water temperature.

13. A condensation prevention control device, comprising: a memory, a processor, and a condensation prevention control program stored in the memory and executable on the processor, wherein the condensation prevention control program is configured to implement the condensation prevention control method according to any one of claims 1 to 11.

14. A storage medium, wherein a condensation prevention control program is stored in the storage medium, and when the condensation prevention control program is executed by a processor, the condensation prevention control method according to any one of claims 1 to 11 is implemented.

FIG. 1

| in a cooling mode, obtaining the water supply temperature of the chiller and the dew point temperature of the space where the terminal heat exchange component is located | S10 |

| calculating the current temperature difference according to the water supply temperature and the dew point temperature | S20 |

| determining the temperature difference change value according to the current temperature difference and the temperature difference calculated at the previous control moment | S30 |

| determining the target water temperature adjustment amount of the chiller according to the current temperature difference and the temperature difference change value | S40 |

| determining the target water temperature of the chiller according to the target water temperature adjustment amount, and controlling the chiller to operate according to the target water temperature | S50 |

FIG. 2

| Room 1<br>Terminal heat<br>exchange<br>component 1 | Room 2<br>Terminal heat<br>exchange<br>component 2 | Room 3<br>Terminal heat<br>exchange<br>component 3 |
|---|---|---|

Chiller

water supply

Backwater

FIG. 3

in a cooling mode, obtaining the water supply temperature of the chiller and the dew point temperature of the space where the terminal heat exchange component is located — S10

calculating the current temperature difference according to the water supply temperature and the dew point temperature — S20

determining the temperature difference change value according to the current temperature difference and the temperature difference calculated at the previous control moment — S30

determining the target water temperature adjustment amount of the chiller according to the current temperature difference and the temperature difference change value — S40

determining the target water temperature of the chiller according to the current target water temperature, the current actual water supply temperature, the target water temperature calculated at the previous control moment, and the target water temperature adjustment amount — S501

controlling the chiller to operate according to the target water temperature — S502

FIG. 4

in a cooling mode, obtaining the water supply temperature of the chiller and the dew point temperature of the space where the terminal heat exchange component is located — S10

calculating the current temperature difference according to the water supply temperature and the dew point temperature — S20

determining whether the current temperature difference and the current operating time meet the preset conditions — S201

Yes

entering the condensation prevention target water temperature adjustment

determining the temperature difference change value according to the current temperature difference and the temperature difference calculated at the previous control moment — S30

determining the target water temperature adjustment amount of the chiller according to the current temperature difference and the temperature difference change value — S40

determining the target water temperature of the chiller according to the target water temperature adjustment amount, and controlling the chiller to operate according to the target water temperature — S50

FIG. 5

FIG. 6

condensation prevention control device

| obtaining module | 10 |
| calculation module | 20 |
| determination module | 30 |
| control module | 40 |

FIG. 7

## INTERNATIONAL SEARCH REPORT

| | International application No. |
|---|---|
| | **PCT/CN2022/134423** |

**A.    CLASSIFICATION OF SUBJECT MATTER**

F24F5/00(2006.01)i;  F24F11/00(2018.01)i;  F24F110/10(2018.01)i

According to International Patent Classification (IPC) or to both national classification and IPC

**B.    FIELDS SEARCHED**

Minimum documentation searched (classification system followed by classification symbols)

IPC: F24F

Documentation searched other than minimum documentation to the extent that such documents are included in the fields searched

Electronic data base consulted during the international search (name of data base and, where practicable, search terms used)

CNTXT, CNKI, VEN: 防凝露, 辐射空调, 冷水机组, 露点, 温差, 间隔, ANTI-CONDENSATION, RADIATION, AIR CONDITION, CHILLER, DEW POINT, TEMPERATURE, INTERVAL

**C.    DOCUMENTS CONSIDERED TO BE RELEVANT**

| Category* | Citation of document, with indication, where appropriate, of the relevant passages | Relevant to claim No. |
|---|---|---|
| Y | CN 107178854 A (GUOANRUI (BEIJING) TECHNOLOGY CO., LTD.) 19 September 2017 (2017-09-19) description, pages 2-4, and figures 1-3 | 1-14 |
| Y | CN 105848446 A (ZHENJIANG XIANGJIANGYUN POWER TECHNOLOGY CO., LTD.) 10 August 2016 (2016-08-10) description, pages 3 and 4, and figures 1 and 2 | 1-14 |
| Y | CN 114370700 A (TSINGHUA UNIVERSITY) 19 April 2022 (2022-04-19) description, pages 4-12, and figures 1-3 | 13, 14 |
| Y | CN 109028403 A (ZHEJIANG GUOZHI TECHNOLOGY CO., LTD.) 18 December 2018 (2018-12-18) specific embodiments | 1-14 |
| Y | CN 114963447 A (BEIJING XINXING HEZHONG TECHNOLOGY CO., LTD.) 30 August 2022 (2022-08-30) specific embodiments | 1-14 |

☑ Further documents are listed in the continuation of Box C.   ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 June 2023** | **26 June 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/134423** |

### C. DOCUMENTS CONSIDERED TO BE RELEVANT

| Category* | Citation of document, with indication, where appropriate, of the relevant passages | Relevant to claim No. |
| --- | --- | --- |
| A | CN 106642537 A (ZHUHAI GREE ELECTRIC APPLIANCES INC.) 10 May 2017 (2017-05-10)<br>entire document | 1-14 |
| A | CN 108375174 A (QINGDAO HAIER AIR CONDITIONER GENERAL CO., LTD.) 07 August 2018 (2018-08-07)<br>entire document | 1-14 |
| A | WO 2018064910 A1 (GREE ELECTRIC APPLIANCES, INC. OF ZHUHAIc) 12 April 2018 (2018-04-12)<br>entire document | 1-14 |
| A | WO 2020245986 A1 (MITSUBISHI ELECTRIC CORP.) 10 December 2020 (2020-12-10)<br>entire document | 1-14 |

Form PCT/ISA/210 (second sheet) (July 2022)

## INTERNATIONAL SEARCH REPORT
### Information on patent family members

International application No.

**PCT/CN2022/134423**

| Patent document cited in search report | | | Publication date (day/month/year) | Patent family member(s) | | | Publication date (day/month/year) |
|---|---|---|---|---|---|---|---|
| CN | 107178854 | A | 19 September 2017 | None | | | |
| CN | 105848446 | A | 10 August 2016 | None | | | |
| CN | 114370700 | A | 19 April 2022 | None | | | |
| CN | 109028403 | A | 18 December 2018 | None | | | |
| CN | 114963447 | A | 30 August 2022 | None | | | |
| CN | 106642537 | A | 10 May 2017 | None | | | |
| CN | 108375174 | A | 07 August 2018 | None | | | |
| WO | 2018064910 | A1 | 12 April 2018 | None | | | |
| WO | 2020245986 | A1 | 10 December 2020 | JPWO | 2020245986 | A1 | 10 December 2020 |
| | | | | JP | 7195423 | B2 | 23 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211217919